# EUROPEAN PATENT SPECIFICATION

(11) **EP 1 426 240 B1**
(45) Date of publication and mention of the grant of the patent: **23.05.2007**
(21) Application number: 03077054.9
(22) Date of filing: 01.07.2003
(51) Int. Cl.: B60R 16/02

(54) **Electrical communication network for a two/three wheel vehicle**
Elektrisches Kommunikationsnetz für ein Zwei-/Dreirad-Kraftfahrzeug
Réseau de communication électrique pour un véhicule deux/trois roues

(30) Priority: 03.12.2002 IT MI20022557
(43) Date of publication of application: 09.06.2004
(73) Proprietor: PIAGGIO & C. S.p.A., 56025 Pontedera (Pisa) (IT)
(72) Inventor: Bagnoli, Alessandro, 56030 Perignano Di Lari (Pisa) (IT)
(74) Representative: Zanardo, Giovanni

(56) References cited:
- EP-A- 0 564 943
- EP-A- 0 791 506
- US-A- 5 508 689
- US-A- 5 534 848
- US-B1- 6 351 828
- US-B1- 6 420 797

## Description

The present invention relates to a communication network for a two/three wheeled vehicle.

In particular, the present invention relates to a communication network for a two/three wheeled vehicle in which various functions of the vehicle are controlled.

An electric communication network according to the preamble of claim 1 is known from EP 0 791 506 A2.

At the state of the art so-called CAN (Controller Area Networks) are known, which are systems with a serial communication line designed for interconnection of "smart" devices, sensors and actuators, within the scope of a single system or of several sub-systems.

Having real time performance, the CAN or "serial bus" system is subject to the international Standard ISO 11898 and covers the two lowest levels of the ISO/OSI model of reference. This standard establishes, among other things, that via said bus the nodes of the network communicate with one another so that the message sent by one node is transmitted to the entire line, but received through filtering only by the nodes concerned, that allocation of priority between simultaneous attempts to access the bus are univocal, without dead times and are non-destructive.

One of the most interesting performances of the CAN protocol is the high level of reliability of data transmission, due to an efficient error identification, classification and isolation mechanism, and automatic disconnection from the network of any defective node.

These specific characteristics of the CAN protocol make network collapse caused by the transmission of errors or faults in the nodes practically impossible.

This technology is used, for example, to replace traditional wiring in high class passenger cars; in fact, all detection and control signals for the devices of the vehicle travel on a single CAN line.

These devices are connected selectively to one another according to the requirements for correct vehicle operation.

The CAN line replaces traditional wiring, the overall dimensions, reliability and complexity of which are inadequate to manage regulation and control of all the modern vehicle equipment.

Also known is the use of a CAN network with two nodes in a motor vehicle to supply communication between the electronic control unit for distribution and the dashboard.

The United States patent US 6,052,632 describes a CAN system for a vehicle having a plurality of microprocessor-based electronic devices, disposed on said vehicle and interconnected to one another by a CAN line. Communication between said electronic devices takes place in accordance with programs processed by these microprocessors.

Currently, in two wheeled vehicles or motor vehicles it is also extremely apparent that there is a need for space for running the wires connecting the various units, owing to the complex nature of the electric system required to manage all the peripherals. In this sense, several "bottlenecks" are found on vehicles; these are extremely small spaces through which a considerable number of wires must run. The diameters of these wires are mostly small, although it is common to come across the wiring of the power section with wires of a larger diameter which make an already critical situation worse.

The Applicant has posed the problem of reviewing the whole electrical system of a motor vehicle from the viewpoint of the least possible wiring, to make it easier to accomplish and improve installation and reliability.

The Applicant found that using a serial line, which requires the use of only two wires (the bus) and on which the information and controls to be implemented by each peripheral are routed via suitable digital strings, the wiring is greatly reduced, especially in the critical areas in which it currently takes up space and is difficult to install.

The Applicant has produced a communication network which allows connection of all peripherals and devices of the motor vehicle using a CAN (Controller Area Network) serial protocol.

The use of this communication system makes it possible to produce a network with a plurality of nodes, connected to which, as outputs, are the various peripheral utilities of the vehicle and, as inputs, the controls located on the vehicle. The controls are intended in the more ample meaning of the word, that is not only those managed directly by the user, but also the automatic controls, such as the thermal switch controlling electric fan of the motor vehicle. One of the main features of the CAN protocol is error management and confinement: the use of this type of bus thus guarantees a certain degree of safety in the management of the entire system.

The use of a digital serial communication protocol, requires the presence on the vehicle, inside said nodes, of "smart" components (microprocessors or microcontrollers) capable of managing, via a suitable program, communication between the network peripherals. The presence of one or more microprocessors on the vehicle is a considerable advantage: management via software of controls which previously required dedicated hardware. This derives in a further reduction both in hardware, with consequent saving in costs, and in the complexity in producing the electrical system. Less complex hardware means fewer electronic components and consequently greater noise immunity, lower vehicle weight (although of minimum extent), lower production costs, greater flexibility in relation to adding new peripherals or subsequent modifications to the system.

The invention is defined by the features of claim 1.

The characteristics and advantages of the network according to the present invention shall become clearer and more apparent from the following description of a non-limiting example of an embodiment with reference to the attached figures, in which:
Figure 1 shows a block diagram of a CAN network for a vehicle with a plurality of nodes;
Figure 2 schematically shows a generic node of the network in figure 1;
Figure 3 shows an embodiment according to the present invention of the network in Figure 1 with four nodes;
Figure 4 shows an example of a flow algorithm illustrating the principal steps implemented by a processing program of the nodes according to the present invention.

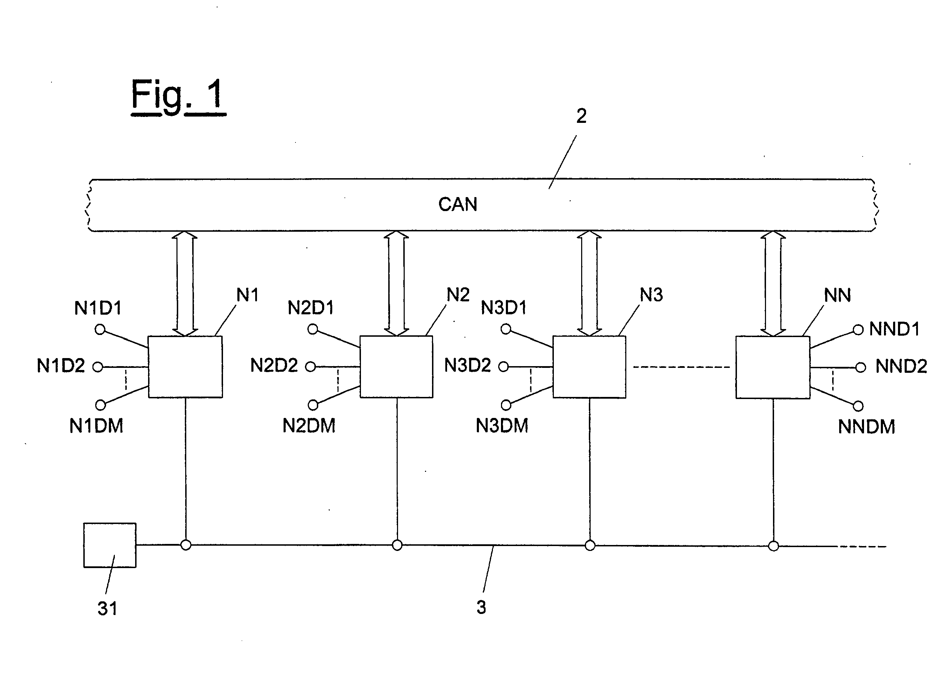

With reference to figure 1 an electric communication network comprises a serial communication line, preferably a CAN (Controller Area Network) line 2 to which a plurality of nodes N1, N2, Nn, are connected. Each of said nodes is preferably supplied by a power line 3 connected to the battery 31 of the vehicle.

Moreover, each node is connected to a plurality of electric devices D1, D2, Dm of the vehicle.

Said nodes are physically disposed in predetermined regions of the vehicle, according to spatial allocation of the electric input and output devices present in said region to which they are connected. For example, a node may be physically disposed in proximity to the region of the vehicle dashboard, provided with the control pilot lights, acoustic and/or luminous warning devices with which the node communicates. Another node may advantageously be disposed in a rear region of the vehicle, in which various electric devices are present, such as rear lights and control sensors of various parameters of the engine, brakes, etc..

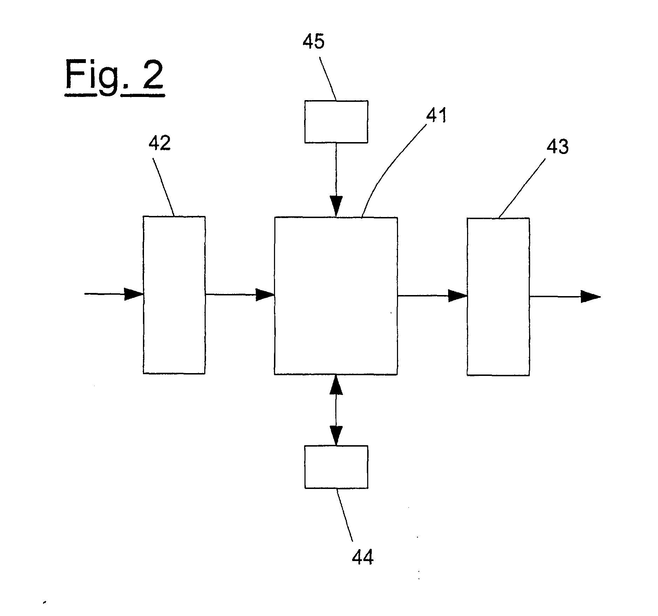

Figure 2 shows the structure of a node comprising a control unit 41, connected to at least an input interface 42 comprising a plurality of input ports to the node, and connected to at least an output interface 43 comprising a plurality of output ports from the node.

Said control unit comprises at least a microcontroller, associated with which are at least a storage device (external to it or integrated inside the processor), an interface device 44 with said CAN line, an RS232 interface device 46 and a electric supply device of the node 45 preferably connected to the battery of the motor vehicle.

Said input ports preferably comprise electronic circuits which code the value of a resistance (resistive sensor) in a digital signal converting the unknown resistance value into a period of time which is then measured by a period meter implemented totally via software.

Said output ports preferably comprise digital output ports and analog output ports, which may advantageously also be used to connect electric devices which require electric power controls.

Moreover, said control unit preferably comprises a local oscillator for synchronization, at least a digital/analog and/or analog/digital converter, at least a voltage regulator, filters and devices with various combinatory logic.

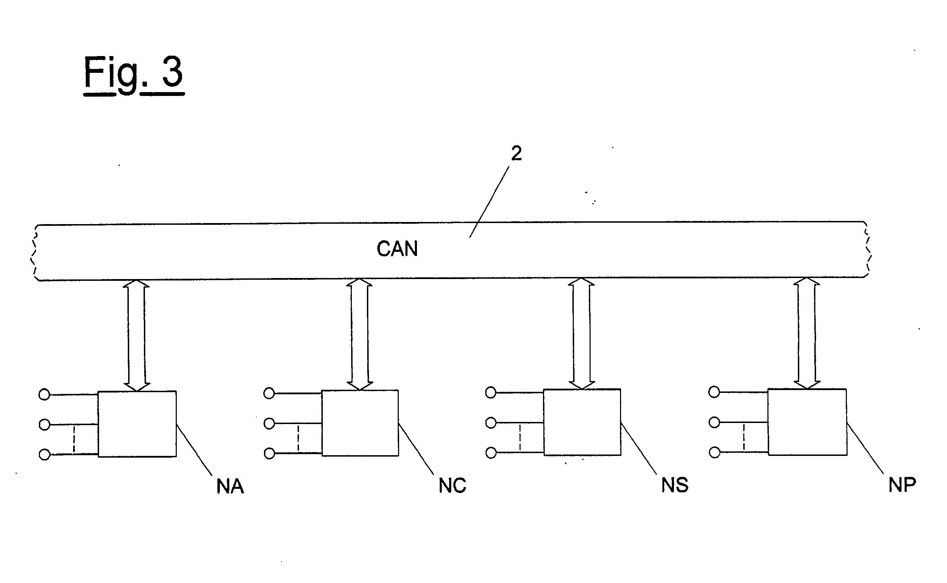

Figure 3 shows an embodiment of the present invention provided with four nodes, respectively a front node NA, disposed in a front region of the motor vehicle, an dashboard node NC, disposed in proximity to the dashboard of the motor vehicle, a saddle node NS, disposed in proximity to the saddle, and a rear node NP, disposed in a rear region of the vehicle. These nodes are connected as described above to a CAN communication line. Each of said nodes controls the electric devices of the vehicle disposed in proximity to the node. For example, the front node NA controls a wheel turning sensor, a radiator temperature sensor, the front lights assembly, etc.. The dashboard node NC preferably controls the controls normally present on the dashboard of a motor vehicle, for example, a brake switch (front and rear), a button to switch off the engine, a button to switch on the lights (side and headlamps), an engine ignition button, etc..

The saddle node NS preferably controls the electric devices disposed in proximity to the engine, such as a fuel pump, a sensor associated with a carburettor throttle valve, a fuel tank level sensor, etc..

The rear node NP preferably controls electric devices disposed in proximity to the rear part of the motor vehicle, for example all the controls for the rear lights of the motor vehicle.

Said electric devices of the motor vehicle may be divided into two categories: electric devices for control and peripheral electric devices. The former refer to controls for the peripheral devices or those with sensors, for example a control is a button to switch on the lights and a peripheral is the corresponding light to be switched on, a control is a fuel level sensor. The electric devices for control are connected to the corresponding node via one of the input ports 42 of said node, while the peripheral electric devices are connected to the corresponding node via one of the output ports 43.

The storage device comprises at least a portion of memory in which a predetermined "firmware" program is installed, which manages the functions of said node. This portion of memory is for example a non-volatile memory.

Preferably, each node is managed by a predetermined program, according to the location of the node and therefore of the characteristics of the electric devices to which it is connected.

According to the present invention, each operating program of each node substantially has the same structure; in particular, the program has a circular flow algorithm, that is it implements subsequent steps cyclically according to a synchronized time sequence.

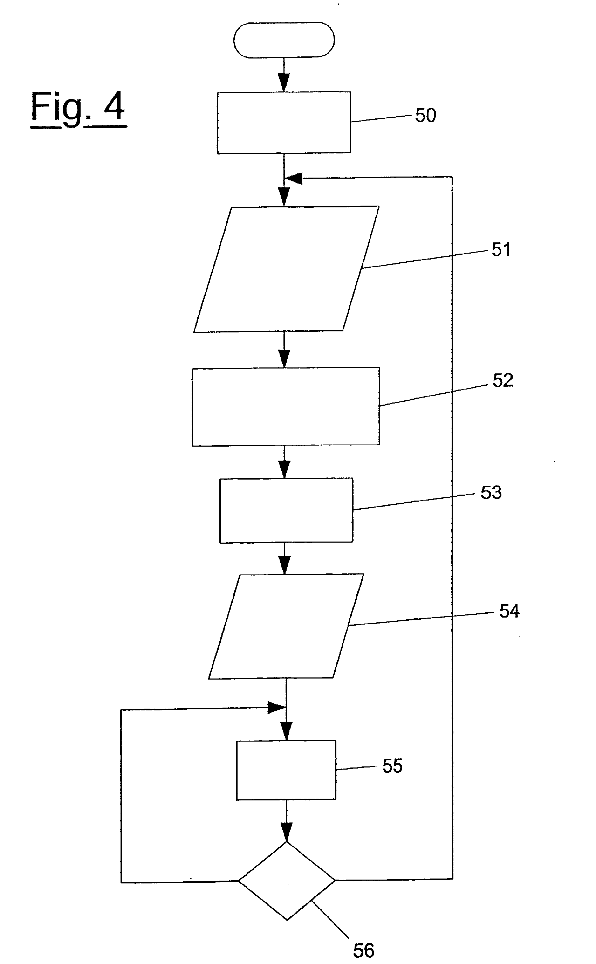

Figure 4 shows an example of an algorithm of flow which describes the main steps implemented in sequence by said operation program of each node. In detail, in a first operations block 50, the initialization operations of the node are implemented which comprise a configuration of the elements of the node, for example ports and CAN interface.

In a second operations block 51, the reading operations from said input ports 42 and the reading operations from the interface of the CAN line 44 are implemented.

A third operations block 52 determines the status of the node on the basis of the readings. In particular, the node adopt three statuses: "on", "stand-by" or "programming". In the first status the node is in the fully operating condition, in the second status the node is standing by to be taken to one of the two conditions "on" or "programming". In said stand-by status the node is characterized in that its electric power consumption is extremely low. Programming status is the status in which the software of the node is updated. Switch from one status to another of the node is implemented on the basis of the inputs which are read in said second operations block, which may come from one of said electric devices for control or from a message on the CAN line, coming for example from another network node.

A fourth processing block 53 determines the functions to be implemented on the basis of the devices present as inputs and as outputs. This block is preferably different in each node, as a consequence of the electric devices to which each node is connected.

A fifth processing block 54 sends signals to the output ports as processed in said fourth block.

A sixth processing block 55 coupled to a test 56 determines implementation of a new cycle of operations starting form said first block, as a consequence of a synchronous signal (full scale of a timer) or an asynchronous signal requesting operation of the "interrupt" node.

The operations cycles are normally implemented in synchronous mode via said "timer", the maximum of which is settable, for example every 10 msec.; in this way controls are managed for updating, for example, the status of the lights, fan, horn, etc., that is those signals which do not require an immediate response from the system. In the case of control functions which refer, for example, to a status switching for the brake lights, the operation is advantageously implemented in compliance with strict safety time requirements in asynchronous mode via interrupts coming from the CAN line and produced by one of the network nodes. In fact, to activate the brake lights a latency in implementing the control in the order of tens of milliseconds is not negligible in relation to human reaction times.

Moreover, according to the present invention, further nodes may be added to the network, for example a node which manages interphone communications with one or more helmets for the users of the motor vehicle.

A further programming node is added "off line", such as via a suitable pin for connection to the CAN line. This programming node is also identifiable in a personal computer, which via suitable programs, may perform system diagnostics and, more generally, may perform diagnostics of the general conditions of the motor vehicle. Moreover, via this personal computer the resident programs in said control unit of each node may be modified to adapt the system to new vehicle requirements and to a wide range of operating conditions.

## Claims

1. Electric communication network for a motor vehicle having a plurality of electric devices (D1, D2, Dm) and a plurality of peripheral electric devices, said network comprising a serial communication electric line (2), a plurality of nodes (N1, N2, Nn), connected to said serial communication line and to said plurality of electric devices, each of said nodes being disposed in a predetermined region of the motor vehicle and being connected to the electric devices located in said region, **characterised in that**
each node comprises a microcontroller (41) and at least a storage device which includes at least a processing program designed to manage communication between said nodes and communication between said nodes and said electric devices, each node may adopt three statuses, "on", "stand-by" and "programming", in the status of "programming" the processing program of the node is updated,
and **in that** it comprises a programming node which may be added off-line and which is connectable to said serial communication line, which performs diagnosis of the general conditions of the motor vehicle and which can modify the processing program of each node to adapt the system to new vehicle requirements and to a wide range of operating conditions.

2. Communication network as claimed in claim 1, in which said programming node is a personal computer.

3. Communication network as claimed in claim 1, comprising a front node (NA) disposed in a front region of the motor vehicle, an dashboard node (NC) disposed in proximity to the dashboard of the motor vehicle, a saddle node (NS) disposed in proximity to the saddle of the motor vehicle and a rear node (NP) disposed in a rear region of the motor vehicle.

4. Communication network as claimed in claim 1, comprising a communication node designed to manage communication via interphone with at least a helmet for the users of the motor vehicle.

5. Communication network as claimed in claim 1, comprising a communication node designed to manage an electronic control unit to control injection and/or ignition.

6. Communication network as claimed in claim 1, comprising a communication node designed to manage a digital and/or analog dashboard.

7. Communication network as claimed in claim 1, comprising a communication node designed to manage a continuously variable speed gear.

8. Communication network as claimed in claim 1, wherein each node comprises a control unit (41), connected to at least an input interface (42) comprising a plurality of input ports to the node, and connected to at least an output interface (43) comprising a plurality of output ports from the node.

9. Communication network as claimed in claim 1, wherein said input interface comprises electronic circuits which code the value of a resistance (resistive sensor) in a digital signal converting the unknown resistance value into a period which is then measured by a period meter implemented totally via software.

10. Communication network as claimed in claim 1 wherein said program comprises a plurality of instructions implemented cyclically.

11. Communication network as claimed in claim 10, wherein said cycles are implemented synchronously upon reaching the full scale of a timer.

12. Communication network as claimed in claim 10, wherein said instructions are implemented asynchronously.

13. Communication network as claimed in claim 8, wherein said output ports preferably comprise digital output ports and analog output ports which may preferably include outputs designed to control power loads.

14. Communication network as claimed in claim 8, wherein said control unit comprises a digital/analog and/or analog/digital converter.

15. Communication network as claimed in claim 1, wherein said serial communication line is a CAN line.

16. Communication network as claimed in claim 8, in which by means of said programming node the resident programs in said control unit of each node may be modified to adapt the system to new vehicle requirements and to a wide range of operating conditions.

17. Communication network as claimed in claim 15, in which said programming node can be connected to said serial communication line "off line" by means of a pin for connection to the CAN line.

## Patentansprüche

1. Elektrisches Kommunikationsnetzwerk für ein Kraftfahrzeug mit mehreren elektrischen Einrichtungen (D1, D2, Dm) und mehreren elektrischen Peripherieeinrichtungen, wobei das Netzwerk eine serielle elektrische Kommunikationsleitung (2) und mehrere Knoten (N1, N2, Nn) umfasst, die mit der seriellen Kommunikationsleitung und den mehreren elektrischen Einrichtungen verbunden sind, wobei jeder der Knoten in einem vorbestimmten Bereich des Kraftfahrzeugs angeordnet ist und mit den in dem Bereich angeordneten elektrischen Einrichtungen verbunden ist,
**dadurch gekennzeichnet, dass**
jeder Knoten einen Mikrocontroller (41) und mindestens eine Speichereinrichtung umfasst, die mindestens ein Verarbeitungsprogramm umfasst, das entworfen ist, um eine Kommunikation zwischen den Knoten und eine Kommunikation zwischen den Knoten und den elektrischen Einrichtungen zu verwalten, wobei jeder Knoten die drei Status "An", "Stand-by" und "Programmieren" annehmen kann, wobei in dem Status "programmieren" das Verarbeitungsprogramm des Knotens aktualisiert wird,
und dass es einen Programmierknoten umfasst, der offline hinzugefügt werden kann, der mit der seriellen Kommunikationsleitung verbindbar ist, der eine Diagnose der allgemeinen Zustände des Kraftfahrzeugs ausführt und der das Verarbeitungsprogramm jedes Knotens modifizieren kann, um das System an neue Fahrzeuganforderungen und einen breiten Bereich von Betriebszuständen anzupassen.

2. Kommunikationsnetzwerk nach Anspruch 1,
wobei der Programmierknoten ein Personal Computer ist.

3. Kommunikationsnetzwerk nach Anspruch 1,
umfassend einen vorderen Knoten (NA), der an einem vorderen Bereich des Kraftfahrzeugs angeordnet ist, einen Armaturenbrettknoten (NC), der in der Nähe des Armaturenbretts des Kraftfahrzeugs angeordnet ist, einen Sitzknoten (NS), der in der Nähe des Sitzes des Kraftfahrzeugs angeordnet ist, und einen hinteren Knoten (NP), der in einem hinteren Bereich des Kraftfahrzeugs angeordnet ist.

4. Kommunikationsnetzwerk nach Anspruch 1,
umfassend einen Kommunikationsknoten, der entworfen ist, um eine Kommunikation über ein Gegensprechgerät mit mindestens einem Helm für die Benutzer des Kraftfahrzeugs zu verwalten.

5. Kommunikationsnetzwerk nach Anspruch 1,
umfassend einen Kommunikationsknoten, der entworfen ist, um eine elektronische Steuereinheit zu verwalten, um eine Einspritzung und/oder Zündung zu steuern.

6. Kommunikationsnetzwerk nach Anspruch 1,
umfassend einen Kommunikationsknoten, der entworfen ist, um ein digitales und/oder analoges Armaturenbrett zu verwalten.

7. Kommunikationsnetzwerk nach Anspruch 1,
umfassend einen Kommunikationsknoten, der entworfen ist, um ein stufenlos verstellbares Getriebe zu verwalten.

8. Kommunikationsnetzwerk nach Anspruch 1,
wobei jeder Knoten eine Steuereinheit (41) umfasst, die mit mindestens einer Eingabeschnittstelle (42) verbunden ist, die mehrere Eingabeports zu dem Knoten umfasst, und mit mindestens einer Ausgabeschnittstelle (43) verbunden ist, die mehrere Ausgabeports von dem Knoten umfasst.

9. Kommunikationsnetzwerk nach Anspruch 1,
wobei die Eingabeschnittstelle elektronische Schaltkreise umfasst, die den Wert eines Widerstands (Widerstandssensor) in ein digitales Signal codieren, wobei der unbekannte Widerstandswert in eine Periode umgewandelt wird, die dann durch ein vollständig über Software realisiertes Periodenmessgerät gemessen wird.

10. Kommunikationsnetzwerk nach Anspruch 1,
wobei das Programm mehrere zyklisch ausgeführte Anweisungen umfasst.

11. Kommunikationsnetzwerk nach Anspruch 10,
wobei die Zyklen beim Erreichen des Skalenendwerts eines Timers synchron ausgeführt werden.

12. Kommunikationsnetzwerk nach Anspruch 10,
wobei die Anweisungen asynchron ausgeführt werden.

13. Kommunikationsnetzwerk nach Anspruch 8,
wobei die Ausgabeports vorzugsweise digitale Ausgabeports und analoge Ausgabeports umfassen, die vorzugsweise Ausgaben umfassen können, die entworfen sind, um Leistungsbelastungen zu steuern.

14. Kommunikationsnetzwerk nach Anspruch 8,
wobei die Steuereinheit einen Digital/Analog- und/oder einen Analog/Digital-Wandler umfasst.

15. Kommunikationsnetzwerk nach Anspruch 1,
wobei die serielle Kommunikationsleitung eine CAN-Leitung ist.

16. Kommunikationsnetzwerk nach Anspruch 8,
wobei die in der Steuereinheit jedes Knotens residenten Programme mittels des Programmierknotens modifiziert werden können, um das System an neue Fahrzeuganforderungen und an einen breiten Bereich von Betriebszuständen anzupassen.

17. Kommunikationsnetzwerk nach Anspruch 15,
wobei der Programmierknoten mit der seriellen Kommunikationsleitung "offline" mittels eines Pins für eine Verbindung mit der CAN-Leitung verbunden sein kann.

## Revendications

1. Réseau de communication électrique pour véhicule à moteur comportant une pluralité de dispositifs électriques (D1, D2, Dm) et une pluralité de dispositifs électriques périphériques, ledit réseau comprenant une ligne électrique de communication en série (2), une pluralité de noeuds (N1, N2, Nn), connectés à ladite ligne de communication en série et à ladite pluralité de dispositifs électriques, chacun desdits noeuds étant placé dans une région prédéterminée du véhicule à moteur et étant connecté aux dispositifs électriques situés dans ladite région, **caractérisé en ce que**
chaque noeud comprend un microcontrôleur (41) et au moins un dispositif de stockage qui comprend au moins un programme de traitement conçu pour gérer la communication entre lesdits noeuds et la communication entre lesdits noeuds et lesdits dispositifs électriques, chaque noeud pouvant adopter trois états, "marche", "attente" et "programmation", dans l'état de "programmation" le programme de traitement du noeud est mis à jour,
et **en ce qu'**il comprend un noeud de programmation, qui peut être ajouté hors-ligne et qui est connectable à ladite ligne de communication en série, qui effectue un diagnostic de l'état général du véhicule à moteur et qui peut modifier le programme de traitement de chaque noeud pour adapter le système à de nouvelles caractéristiques du véhicule et à une large gamme de conditions de fonctionnement.

2. Réseau de communication selon la revendication 1, dans lequel ledit noeud de programmation est un ordinateur personnel.

3. Réseau de communication selon la revendication 1, comprenant un noeud avant (NA) placé dans une région avant du véhicule à moteur, un noeud de tableau de bord (NC) placé à proximité du tableau de bord du véhicule à moteur, un noeud de selle (NS) placé à proximité de la selle du véhicule à moteur et un noeud arrière (NP) placé dans une région arrière du véhicule à moteur.

4. Réseau de communication selon la revendication 1, comprenant un noeud de communication conçu pour gérer la communication via un interphone avec au moins un casque pour les utilisateurs du véhicule à moteur.

5. Réseau de communication selon la revendication 1, comprenant un noeud de communication conçu pour gérer une unité de commande électronique pour commander l'injection et/ou l'allumage.

6. Réseau de communication selon la revendication 1, comprenant un noeud de communication conçu pour gérer un tableau de bord numérique et/ou analogique.

7. Réseau de communication selon la revendication 1, comprenant un noeud de communication conçu pour gérer une transmission à variation continue.

8. Réseau de communication selon la revendication 1, dans lequel chaque noeud comprend une unité de commande (41), connectée à au moins une interface d'entrée (42) comprenant une pluralité de ports d'entrée du noeud, et connectée à au moins une interface de sortie (43) comprenant une pluralité de ports de sortie du noeud.

9. Réseau de communication selon la revendication 1, dans lequel ladite interface d'entrée comprend des circuits électroniques qui codent la valeur d'une résistance(capteur résistif) en un signal numérique convertissant la valeur de résistance inconnue en une période qui est ensuite mesurée par un périodemètre mis en oeuvre de façon totalement logicielle.

10. Réseau de communication selon la revendication 1, dans lequel ledit programme comprend une pluralité d'instructions mises en oeuvre de façon cyclique.

11. Réseau de communication selon la revendication 10, dans lequel lesdits cycles sont mis en oeuvre de façon synchrone après avoir atteint la pleine échelle d'un temporisateur.

12. Réseau de communication selon la revendication 10, dans lequel lesdites instructions sont mises en oeuvre de façon asynchrone.

13. Réseau de communication selon la revendication 8, dans lequel lesdits ports de sortie comprennent de préférence des ports de sortie numériques et des ports de sortie analogiques qui peuvent comporter de préférence des sorties conçues pour commander des charges de puissance.

14. Réseau de communication selon la revendication 8, dans lequel ladite unité de commande comprend un convertisseur numérique-analogique et/ou analogique-numérique.

15. Réseau de communication selon la revendication 1, dans lequel ladite ligne de communication en série est une ligne de réseau CAN.

16. Réseau de communication selon la revendication 8, dans lequel, au moyen dudit noeud de programmation, les programmes résidents de ladite unité de commande de chaque noeud peuvent être modifiés pour adapter le système à de nouvelles caractéristiques du véhicule et à une large gamme de conditions de fonctionnement.

17. Réseau de communication selon la revendication 15, dans lequel ledit noeud de programmation peut être connecté à ladite ligne de communication en série "hors ligne" au moyen d'une broche pour la connexion à la ligne de réseau CAN.
